(19) Europäisches Patentamt
European Patent Office
Office européen des brevets

(11) **EP 4 439 973 A1**

(12) **EUROPEAN PATENT APPLICATION**
published in accordance with Art. 153(4) EPC

(43) Date of publication:
**02.10.2024 Bulletin 2024/40**

(21) Application number: **22912981.2**

(22) Date of filing: **10.03.2022**

(51) International Patent Classification (IPC):
**H02P 29/68** (2016.01)  **H02P 27/08** (2006.01)

(52) Cooperative Patent Classification (CPC):
**H02P 27/08; H02P 29/68**

(86) International application number:
**PCT/CN2022/080239**

(87) International publication number:
**WO 2023/123675 (06.07.2023 Gazette 2023/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.12.2021 CN 202111651477**

(71) Applicant: **Guangdong Welling Motor
Manufacturing Co., Ltd.
Foshan, Guangdong 528311 (CN)**

(72) Inventors:
• **BIN, Hong**
  **Foshan, Guangdong 528311 (CN)**
• **ZHANG, Kai**
  **Foshan, Guangdong 528311 (CN)**
• **ZHAO, Xiaoan**
  **Foshan, Guangdong 528311 (CN)**
• **SHEN, Yunsong**
  **Foshan, Guangdong 528311 (CN)**

(74) Representative: **RGTH
Patentanwälte PartGmbB
Neuer Wall 10
20354 Hamburg (DE)**

(54) **SWITCH TUBE JUNCTION TEMPERATURE MEASUREMENT METHOD, ELECTRIC MOTOR CONTROLLER, ELECTRIC MOTOR CONTROL SYSTEM, AND MEDIUM**

(57) Provided are a method for detecting a junction temperature of a switch tube, an electric motor controller, an electric motor control system, and a medium. The electric motor control system includes a three-phase inverter bridge (10) configured to drive an electric motor to operate. The method includes: (S10) determining a tube voltage drop and a turn-on current when a lower tube of at least one phase bridge arm in the three-phase inverter bridge is turned on; (S20) determining, according to the tube voltage drop and the turn-on current, a turn-on resistance when the lower tube of the at least one phase bridge arm is turned on; and (S30) determining, according to the turn-on resistance, a junction temperature of a lower tube of the at least one phase bridge arm.

Determining a tube voltage drop and a turn-on current when a lower tube of at least one phase bridge arm in the three-phase inverter bridge is turned on — S10

Determining, according to the tube voltage drop and the turn-on current, a turn-on resistance when the lower tube of the at least one phase bridge arm is turned on — S20

Determining, according to the turn-on resistance, a junction temperature of a lower tube of the at least one phase bridge arm — S30

FIG. 2

**Description**

**CROSS-REFERENCE TO RELATED APPLICATIONS**

This application claims priority to Chinese Patent Application No. 202111651477.2 filed on December 30, 2021 and entitled "SWITCH TUBE JUNCTION TEMPERATURE MEASUREMENT METHOD, ELECTRIC MOTOR CONTROLLER, ELECTRIC MOTOR CONTROL SYSTEM, AND MEDIUM", the entire disclosure of which is incorporated herein by reference.

**FIELD**

The present disclosure relates to the field of motor control technologies, and more particularly, to a method for detecting a junction temperature of a switch tube in an electric motor control system, an electric motor controller, a computer-readable storage medium, and an electric motor control system.

**BACKGROUND**

In the field of home appliance motor control or small or lightweight electric vehicle control or the like, based on considerations from many aspects, like from cost and space, an electric motor controller mostly uses a single resistor current sampling method to control an electric motor. Meanwhile, a switch device is realized using discrete devices on a large scale. A conventional temperature protection method for a discrete switch device is usually to provide and use a temperature resistance around the switch device to perform temperature protection. Although this method provides a temperature sensing ability, because the temperature resistance receives a space radiation temperature of the switch device, this method has, affected by a mounting position of the temperature resistance, a limited ability to sense an internal temperature change of the switch device, which leads to inaccurate temperature detection of the switch device, affecting temperature protection of the switch device.

**SUMMARY**

The present disclosure aims to solve at least one of the technical problems in the related art. To this end, a first object of the present disclosure is to provide a method for detecting a junction temperature of a switch tube in an electric motor control system. A turn-on resistance is calculated according to a tube voltage drop and a turn-on current. A junction temperature of a lower tube is determined based on the turn-on resistance. In this way, the obtained junction temperature of the lower tube has high accuracy. Therefore, it is beneficial to temperature protection performed on the switch device.
A second object of the present disclosure is to provide an electric motor controller.
A third object of the present disclosure is to provide a computer-readable storage medium.
A fourth object of the present disclosure is to provide an electric motor control system.
To achieve the above object, an embodiment of a first aspect of the present disclosure provides a method for detecting a junction temperature of a switch tube in an electric motor control system. The electric motor control system comprises a three-phase inverter bridge driving an electric motor to operate. The method comprises: determining a tube voltage drop and a turn-on current when a lower tube of at least one phase bridge arm in the three-phase inverter bridge is turned on; determining, according to the tube voltage drop and the turn-on current, a turn-on resistance when the lower tube of the at least one phase bridge arm is turned on; and determining, according to the turn-on resistance, a junction temperature of the lower tube of the at least one phase bridge arm.
With the method for detecting the junction temperature of the switch tube in the electric motor control system according to embodiments of the present disclosure, by determining the tube voltage drop and the turn-on current when the lower tube of the at least one phase bridge arm in the three-phase inverter bridge is turned on; determining, according to the tube voltage drop and the turn-on current, the turn-on resistance when the lower tube of the at least one phase bridge arm is turned on; and determining, according to the turn-on resistance, the junction temperature of the lower tube of the at least one phase bridge arm, the obtained junction temperature of the lower tube is made to have a higher degree of accuracy, which is beneficial to the temperature protection performed on the switch device.
According to an embodiment of the present disclosure, the determining the tube voltage drop and the turn-on current when the lower tube of the at least one phase bridge arm in the three-phase inverter bridge is turned on comprises: determining, according to a turn-on time sequence of the switch tube in the three-phase inverter bridge, a sampling duration of the tube voltage drop and a sampling duration of a phase current of the electric motor; obtaining the tube voltage drop and the phase current of at least one phase of the electric motor when the lower tube of the at least one phase bridge arm is turned on by respectively performing voltage sampling and current sampling at the sampling duration of the tube voltage drop and the sampling duration of the phase current of the electric motor; and determining, according to the phase current of the at least one phase of the electric motor, the turn-on current when the lower tube of the at least one phase bridge arm is turned on.

According to an embodiment of the present disclosure, in response to performing electric motor phase current detection by using a single resistor, the determining, according to the turn-on time sequence of the switch tube in the three-phase inverter bridge, the sampling duration of the tube voltage drop and the sampling duration of the phase current of the electric motor comprises: determining, according to the turn-on time sequence of the switch tube in the three-phase inverter bridge, a first sampling window time, a second sampling window time, and a third sampling window time. The first sampling window time is a time period starting from a time instant of a turn-on of each of lower tubes of a three-phase bridge arm in the three-phase inverter bridge and ending at a time instant of a turn-on of an upper tube of any phase bridge arm in the three-phase inverter bridge. The second sampling window time is a time period starting from a time instant of a turn-on of an upper tube of any phase bridge arm in the three-phase inverter bridge and a delaying of a first predetermined time, and ending at a time instant of a turn-on of an upper tube of a next phase bridge arm in the three-phase inverter bridge. The third sampling window time is a time period starting from a time instant of the turn-on of the upper tube of the next phase bridge arm in the three-phase inverter bridge and the delaying of the first predetermined time, and ending at a time instant of a turn-on of an upper tube of the last phase bridge arm in the three-phase inverter bridge; and taking at least two of the first sampling window time, the second sampling window time, and the third sampling window time as the sampling duration of the tube voltage drop and the sampling duration of the phase current; or taking the third sampling window time as the sampling duration of the tube voltage drop and the sampling duration of the phase current.

According to an embodiment of the present disclosure, when the first sampling window time, the second sampling window time, and the third sampling window time are all used as the sampling duration of the tube voltage drop and the sampling duration of the phase current, the method comprises: determining the tube voltage drop and the turn-on current when the lower tube of each phase bridge arm in the three-phase inverter bridge is turned on.

According to an embodiment of the present disclosure, the determining the tube voltage drop and the turn-on current when the lower tube of each phase bridge arm in the three-phase inverter bridge is turned on comprises: obtaining, during the first sampling window time, a tube voltage drop when the lower tube of each phase bridge arm is turned on; obtaining, during the second sampling window time, a U-phase current, a tube voltage drop when a lower tube of a V-phase bridge arm is turned on, and a tube voltage drop when a lower tube of a W-phase bridge arm is turned on; obtaining, during the third sampling window time, a W-phase current or a V-phase current and the tube voltage drop when the lower tube of the W-phase bridge arm is turned on or the tube voltage drop when the lower tube of the V-phase bridge arm is turned on; determining, according to the U-phase current and the W-phase current, the V-phase current; or determining, according to the U-phase current and the V-phase current, the W-phase current; and determining, according to the U-phase current, the W-phase current, and the V-phase current, the turn-on current when the lower tube of each phase bridge arm is turned on.

According to an embodiment of the present disclosure, the determining the tube voltage drop and the turn-on current when the lower tube of each phase bridge arm in the three-phase inverter bridge is turned on comprises: obtaining, during the first sampling window time, a tube voltage drop when the lower tube of each phase bridge arm is turned on; obtaining, during the second sampling window time, a V-phase current and a tube voltage drop when a lower tube of a U-phase bridge arm is turned on and a tube voltage drop when a lower tube of a W-phase bridge arm is turned on; obtaining, during the third sampling window time, a W-phase current or a U-phase current, and the tube voltage drop when the lower tube of the W-phase bridge arm is turned on or the tube voltage drop when the lower tube of the U-phase bridge arm is turned on; determining, according to the V-phase current and the W-phase current, the U-phase current; or determining, according to the V-phase current and the U-phase current, the W-phase current; and determining, according to the U-phase current, the W-phase current, and the V-phase current, the turn-on current when the lower tube of each phase bridge arm is turned on.

According to an embodiment of the present disclosure, the determining the tube voltage drop and the turn-on current when the lower tube of each phase bridge arm in the three-phase inverter bridge is turned on comprises: obtaining, during the first sampling window time, a tube voltage drop when the lower tube of each phase bridge arm is turned on; obtaining, during the second sampling window time, a W-phase current and a tube voltage drop when a lower tube of a U-phase bridge arm is turned on and a tube voltage drop when a lower tube of a V-phase bridge arm is turned on; obtaining, during the third sampling window time, a U-phase current or a V-phase current, and the tube voltage drop when the lower tube of the U-phase bridge arm is turned on or the tube voltage drop when the lower tube of the V-phase bridge arm is turned on; determining, according to the W-phase current and the U-phase current, the V-phase current; or determining, according to the W-phase current and the V-phase current, the U-phase current; and determining, according to the U-phase current, the W-phase current, and the V-phase current, the turn-on current when the lower tube of each phase bridge arm is turned on.

According to an embodiment of the present disclosure, the method further comprises, subsequent to determining the junction temperature of the lower tube: performing instantaneous over-temperature protection and inverse-time-limit overload protection according to the junction temperature of the lower tube.

According to an embodiment of the present disclosure, the performing instantaneous over-temperature protection according to the junction temperature of the lower tube comprises: controlling the three-phase inverter bridge to stop outputting when the junction temperature of the lower tube is greater than a predetermined maximum protection temperature.

According to an embodiment of the present disclosure, the performing inverse-time-limit overload protection according to the junction temperature of the lower tube comprises: determining an inverse-time-limit protection curve and performing overload protection timing according to a relationship between the junction temperature of the lower tube and the inverse-time-limit protection curve; and controlling, when a timing time arrives, the three-phase inverter bridge to stop outputting.

According to an embodiment of the present disclosure, the timing time is inversely related to the junction temperature of the lower tube.

In order to achieve the above object, an embodiment of a second aspect of the present disclosure provides an electric motor controller. The electric motor controller comprises a memory, a processor, and a switch-tube junction-temperature detection program for detecting a junction temperature of a switch tube in an electric motor control system that is stored in the memory and executable on the processor. The switch-tube junction-temperature detection program, when executed by the processor, implements the method for detecting the junction temperature of the switch tube in the electric motor control system as described above.

With the electric motor controller according to the embodiments of the present disclosure, based on the aforementioned method for detecting the junction temperature of the switch tube in the electric motor control system, the turn-on resistance is calculated according to the tube voltage drop and the turn-on current, and the junction temperature of the lower tube is determined based on the turn-on resistance, which makes the obtained junction temperature of the lower tube have a high degree of accuracy. Therefore, it is beneficial to the temperature protection performed on the switch device.

In order to achieve the above object, an embodiment of a third aspect of the present disclosure provides a computer-readable storage medium having a switch-tube junction-temperature detection program for detecting a junction temperature of a switch tube in an electric motor control system stored thereon. The switch-tube junction-temperature detection program, when executed by a processor, implements the method for detecting the junction temperature of the switch tube in the electric motor control system as described above.

With the computer-readable storage medium according to the embodiments of the present disclosure, based on the aforementioned method for detecting the junction temperature of the switch tube in the electric motor control system, the turn-on resistance is calculated according to the tube voltage drop and the turn-on current, and the junction temperature of the lower tube is determined based on the turn-on resistance, so that the obtained junction temperature of the lower tube is made have a high degree of accuracy, which is beneficial to the temperature protection performed on the switch device.

In order to achieve the above object, an embodiment of a fourth aspect of the present disclosure provides an electric motor control system. The electric motor control system comprises: an electric motor; a three-phase inverter bridge connected between direct current buses and driving the electric motor to operate; a current detection unit disposed corresponding to a negative electrode of the direct current bus and configured to detect a direct current bus current; a first voltage detection unit disposed corresponding to a lower tube of a U-phase bridge arm in the three-phase inverter bridge and configured to detect a lower tube voltage drop of the U-phase bridge arm; a second voltage detection unit disposed corresponding to a lower tube of a V-phase bridge arm in the three-phase inverter bridge and configured to detect a lower tube voltage drop of the V-phase bridge arm; a third voltage detection unit disposed corresponding to a lower tube of a W-phase bridge arm in the three-phase inverter bridge and configured to detect a lower tube voltage drop of the W-phase bridge arm; and a control unit. The control unit is configured to: determine, according to the direct current bus current, a turn-on current when a lower tube of at least one phase bridge arm in the three-phase inverter bridge is turned on; obtain a tube voltage drop when a lower tube of at least one phase bridge arm in the three-phase inverter bridge is turned on; determine, according to the tube voltage drop and the turn-on current, a turn-on resistance when the lower tube of the at least one phase bridge arm is turned on; and determine, according to the turn-on resistance, a junction temperature of the lower tube of the at least one phase bridge arm.

With the electric motor control system according to the embodiments of the present disclosure, the turn-on current is determined by the control unit according to the direct current bus current when the lower tube of the at least one phase bridge arm in the three-phase inverter bridge is turned on, the tube voltage drop is obtained by the control unit when the lower tube of the at least one phase bridge arm in the three-phase inverter bridge is turned on, the turn-on resistance is determined by the control unit according to the tube voltage drop and the turn-on current when the lower tube of the at least one phase bridge arm is turned on, and the junction temperature of the lower tube of the at least one phase bridge arm is determined by the control unit according to the turn-on resistance. In this way, the obtained junction temperature of the lower tube has high accuracy, and it is beneficial to the temperature protection performed on the switch device.

Additional aspects and advantages of the present disclosure will be provided in part in the following description, or will become apparent in part from the following description, or can be learned from practicing of the present disclosure.

**BRIEF DESCRIPTION OF THE DRAWINGS**

FIG. 1 is a schematic diagram of a structure of an electric motor control system according to an embodiment of the present disclosure.

FIG. 2 is a schematic flowchart of a method for detecting a junction temperature of a switch tube according to an embodiment of the present disclosure.

FIG. 3 is a graph of a relationship between a turn-on resistance and a junction temperature of a switch tube according to an embodiment of the present disclosure.

FIG. 4 is a schematic flowchart of obtaining a turn-on current of a switch tube according to an embodiment of the present disclosure.

FIG. 5a is a schematic diagram of sampling a tube voltage drop and a phase current of a lower tube according to a first embodiment of the present disclosure.

FIG. 5b is a schematic diagram of sampling a tube voltage drop and a phase current of a lower tube according to a second embodiment of the present disclosure.

FIG. 5c is a schematic diagram of sampling a tube voltage drop and a phase current of a lower tube according to a third embodiment of the present disclosure.

FIG. 6 is a graph of an inverse-time-limit protection curve according to an embodiment of the present disclosure.

**DETAILED DESCRIPTION**

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limiting, the present disclosure.

In embodiments of the present disclosure, the electric motor control system may comprise: a three-phase inverter bridge configured to drive the electric motor to operate.

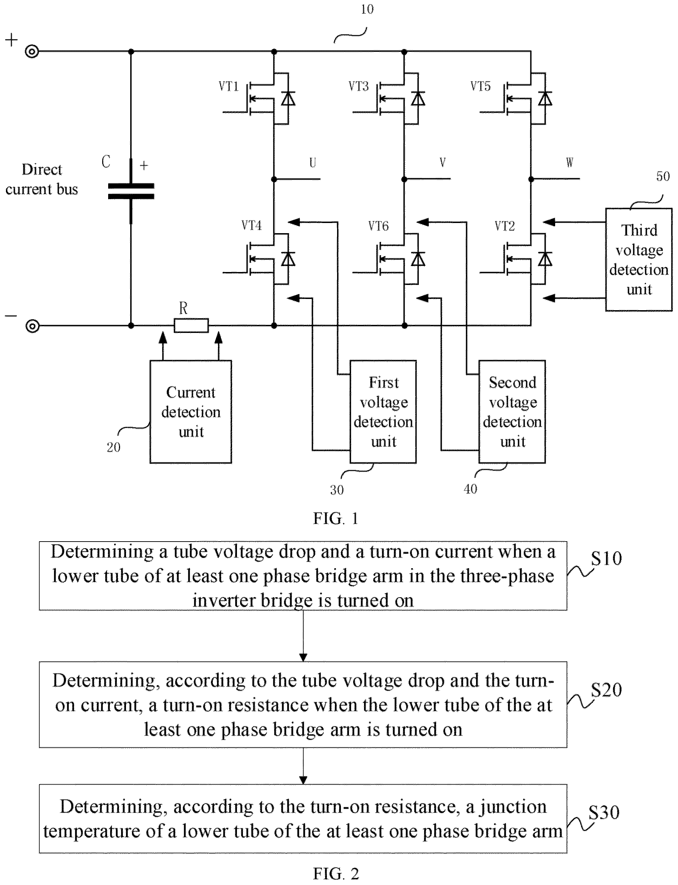

In an exemplary embodiment of the present disclosure, with reference to FIG. 1, the three-phase inverter bridge comprises a U-phase bridge arm, a V-phase bridge arm, and a W-phase bridge arm. The U-phase bridge arm comprises an upper tube VT1 and a lower tube VT4. The V-phase bridge arm comprises an upper tube VT3 and a lower tube VT6. The W-phase bridge arm comprises an upper tube VT5 and a lower tube VT2. A first terminal of the upper tube VT1 is connected to a positive electrode of a direct current bus, a first terminal of the lower tube VT4 is connected to a second terminal of the upper tube VT1, and a second terminal of the lower tube VT4 is connected to a negative electrode of a direct current bus. A first terminal of the upper tube VT3 is connected to the positive electrode of the direct current bus, a first terminal of the lower tube VT6 is connected to a second terminal of the upper tube VT3, and a second terminal of the lower tube VT6 is connected to the negative electrode of the direct current bus. A first terminal of the upper tube VT5 is connected to the positive electrode of the direct current bus, a first terminal of the lower tube VT2 is connected to a second terminal of the upper tube VT5, and a second terminal of the lower tube VT2 is connected to the negative electrode of the direct current bus. A control terminal of the upper tube VT1, a control terminal of the lower tube VT4, a control terminal of the upper tube VT3, a control terminal of the lower tube VT6, a control terminal of the upper tube VT5, and a control terminal of the lower tube VT2 each are connected to a control unit. The control unit may comprise a singlechip with a memory, Digital Signal Processing (DSP), and other control devices. The six switch tubes are controlled to be turned on or off by the control unit, to invert a direct current of the direct current bus into alternating current, which is provided to back-end loads, such as an electric motor, to enable the electric motor to operate. The direct current may be obtained from a battery or by rectifying the alternating current, which is not limited herein specifically. Moreover, a direct current bus capacitor is provided between the positive electrode and the negative electrode of the direct current bus for energy storage and voltage stabilization.

When the six switch tubes are controlled to be turned on or off by the control unit to operate, the six switch tubes will heat up to cause a temperature of the switch tubes to rise, and the switch tubes may be damaged in serious cases. Therefore, in the related art, a temperature resistance is provided around the six switch tubes to perform temperature protection. Although this method provides a temperature sensing ability, because the temperature resistance receives a space radiation temperature of the switch tube, this method has, affected by a mounting position of the temperature resistance, a limited ability to sense an internal temperature change of the switch tube, which leads to inaccurate temperature detection of the switch tube, affecting temperature protection of the switch tube. Based on this, the present disclosure provides a method for detecting a junction temperature of the switch tube, by which a junction temperature of a lower tube can be accurately obtained, which is beneficial to the temperature protection performed on the switch tube.

FIG. 2 is a schematic flowchart of a method for detecting a junction temperature of a switch tube according to an embodiment of the present disclosure. Referring to FIG. 2, the method for detecting the junction temperature of the switch tube may comprise the following steps.

At step S10, a tube voltage drop and a turn-on current are determined when a lower tube of at least one phase bridge arm in the three-phase inverter bridge is turned on.

It should be noted that the tube voltage drop is a voltage difference between a first terminal and a second terminal of the switch tube when the switch tube is turned on, and the turn-on current is a current flowing through the switch tube when the switch tube is turned on. As shown in FIG. 1, a tube voltage drop of the lower tube VT4 is a voltage difference between the first terminal and the second terminal of the lower tube VT4 when the lower tube VT4 is turned on, and a turn-on current of the lower tube VT4 is a current flowing through the lower tube VT4 when the lower tube VT4 is turned on; a tube voltage drop of the lower tube VT6 is a voltage difference between the first terminal and the second terminal of the lower tube VT6 when the lower tube VT6 is turned on, and a turn-on current of the lower tube VT6 is a current flowing through the lower tube VT6 when the lower tube VT6 is turned on; and a tube voltage drop of the lower tube VT2 is a voltage difference between the first terminal and the second terminal of the lower tube VT2 when the lower tube VT2 is turned on, and a turn-on current of the lower tube VT2 is a current flowing through the lower tube VT2 when the lower tube VT2 is turned on.

When the tube voltage drop is determined at the time of a turn-on of the lower tube, a voltage detection unit may be provided corresponding to each lower tube, and the tube voltage drop may be detected by the voltage detection unit during the turn-on of the corresponding lower tube. As shown in FIG. 1, a first voltage detection unit may be provided corresponding to the lower tube VT4, by which the tube voltage drop of the lower tube VT4 is detected; a second voltage detection unit may be provided corresponding to the lower tube VT6, by which the tube voltage drop of the lower tube VT6 is detected; and a third voltage detection unit may be provided corresponding to the lower tube VT2, by which the tube voltage drop of the lower tube VT2 is detected.

When the turn-on current of the lower tube is determined, a current detection unit may be provided on a direct current bus. The direct current bus current may be detected by the current detection unit, and the corresponding turn-on current may be obtained from the direct current bus current. As shown in FIG. 1, a current sampling resistor and a current detection unit may be provided at the negative electrode of the direct current bus, and the direct current bus current may be obtained by sampling through the current sampling resistor and the current detection unit. Since there is a correlation between the direct current bus current and the turn-on current of the lower tube, the turn-on currents of the lower tubes VT4, VT6, and VT2 can be obtained based on the direct current bus current. For example, based on a trend of a loop current during a turn-on, turn-on currents of some of switch tubes in the lower tubes VT4, VT6, and VT2 are directly obtained, while turn-on currents of other switch tubes can be obtained based on a single resistor current reconstruction method, which eliminates the need to provide a current sampling resistor and a current detection unit for each of the lower tubes, and is beneficial to a reduction in cost and space occupation.

At step S20, a turn-on resistance is determined according to the tube voltage drop and the turn-on current when the lower tube of the at least one phase bridge arm is turned on.

In an exemplary embodiment of the present disclosure, when the tube voltage drop and the turn-on current of the switch tube are obtained, the resistance may be calculated based on a relational equation of the voltage and the current, which is the turn-on resistance when the switch tube is turned on. As shown in FIG. 1, a turn-on resistance of the lower tube VT4 can be calculated after the tube voltage drop and turn-on current of the lower tube VT4 are obtained; a turn-on resistance of the lower tube VT6 can be calculated after the tube voltage drop and turn-on current of the lower tube VT6 are obtained; and a turn-on resistance of the lower tube VT2 can be calculated after the tube voltage drop and turn-on current of the lower tube VT2 are obtained. In an exemplary embodiment of the present disclosure, it is calculated by the following formula (1):

$$R_{dson-real} = \frac{V_{ds}}{I} \qquad (1)$$

where $R_{dson-real}$ is the turn-on resistance, $V_{ds}$ is the tube voltage drop, and I is the turn-on current.

At step S30, a junction temperature of a lower tube of the at least one phase bridge arm is determined according to the turn-on resistance.

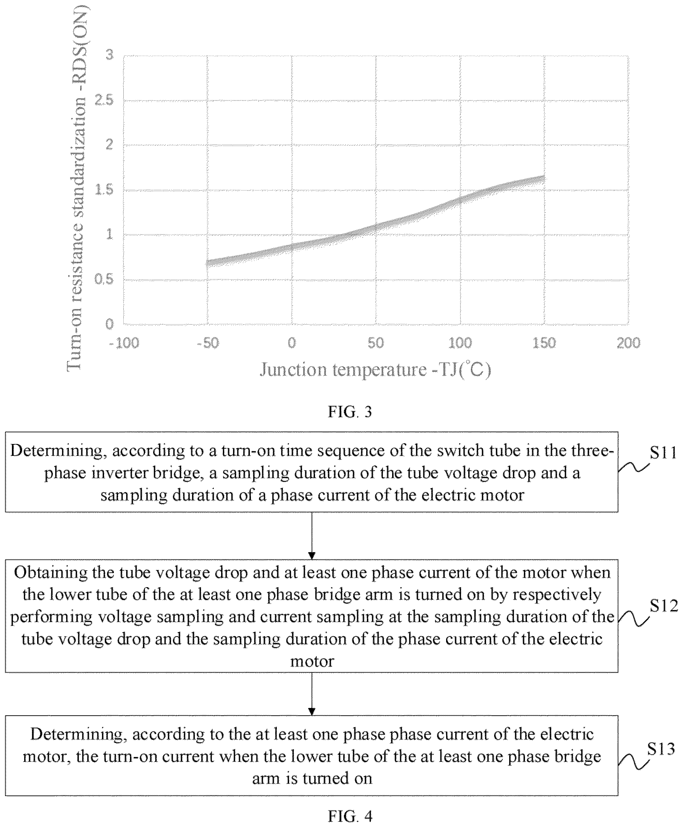

In an exemplary embodiment of the present disclosure, after the turn-on resistance of the switch tube is obtained, the junction temperature of the switch tube may be obtained based on a relationship between the turn-on resistance and the junction temperature of the switch tube. In an exemplary embodiment of the present disclosure, a relationship curve between a standard turn-on resistance of the device and a PN junction temperature of the device (shown in FIG. 3) can be obtained through the selected switch tube, and then the corresponding curve is converted into a computer data table value and saved in the aforementioned memory, which can be obtained by searching the table during an actual application. As shown in FIG. 1, after the turn-on resistance of the lower tube VT4 is obtained, a junction temperature of the lower tube VT4 can be obtained by looking up the table based on the characteristic curves of the turn-on resistance and the junction temperature shown in FIG. 3; after the turn-on resistance of the lower tube VT6 is obtained, a junction temperature of the lower tube VT6 can be obtained by looking up the table based on the characteristic curves of the turn-on resistance and the junction temperature shown in FIG. 3; after the turn-on resistance of the lower tube VT2 is obtained, a junction temperature of the lower tube VT2 can be obtained by looking up the table based on the characteristic curves of the turn-on resistance and the junction temperature shown in FIG. 3.

In the above embodiment, by obtaining an internal resistance voltage (i.e. the tube voltage tube) and the turn-on current when the switch tube is turned on, and deducing the turn-on resistance of the switch tube according to the turn-on current and the tube voltage drop, the junction temperature of the switch tube can be accurately obtained by searching a table on the basis of the turn-on resistance. Compared with the junction temperature of the switch tube obtained indirectly through a temperature resistance placed aside and based on space temperature radiation, it can quickly respond to an internal temperature of the switch tube, which is conducive to accurate and reliable temperature protection of the switch tube. Moreover, the method is simple and easy to realize engineering applications.

In some embodiments of the present disclosure, with reference to FIG. 4, the aforementioned step S10 may specifically comprise the following steps.

At step S11, a sampling duration of the tube voltage drop and a sampling duration of a phase current of the electric motor are determined according to a turn-on time sequence of the switch tube in the three-phase inverter bridge.

In an exemplary embodiment of the present disclosure, the turn-on time sequence of the switch tube determines a turn-on order of the switch tube. Therefore, the sampling duration of the tube voltage drop and the sampling duration of the phase current can be determined based on the turn-on time sequence.

In some embodiments of the present disclosure, in response to performing electric motor phase current detection of the electric motor by using a single resistor, the step S11 may specifically comprise: determining, according to the turn-on time sequence of the switch tube in the three-phase inverter bridge, a first sampling window time, a second sampling window time, and a third sampling window time; and taking at least two of the first sampling window time, the second sampling window time, and the third sampling window time as the sampling duration of the tube voltage drop and the sampling duration of the phase current; or taking the third sampling window time as the sampling duration of the tube voltage drop and the sampling duration of the phase current. The first sampling window time is a time period starting from a time instant of a turn-on of each of lower tubes of a three-phase bridge arm and ending at a time instant of a turn-on of an upper tube of any one of the three-phase bridge arms. The second sampling window time is a time period starting from a time instant of a turn-on of an upper tube of any one of the three-phase bridge arms and a delaying of a first predetermined time, and ending at a time instant of a turn-on of an upper tube of a next phase bridge arm in the three-phase bridge arm. The third sampling window time is a time period starting from a time instant of the turn-on of the upper tube of the next phase bridge arm in the three-phase bridge arm and the delaying of the first predetermined time, and ending at a time instant of a turn-on of an upper tube of the last phase bridge arm in the three-phase bridge arm.

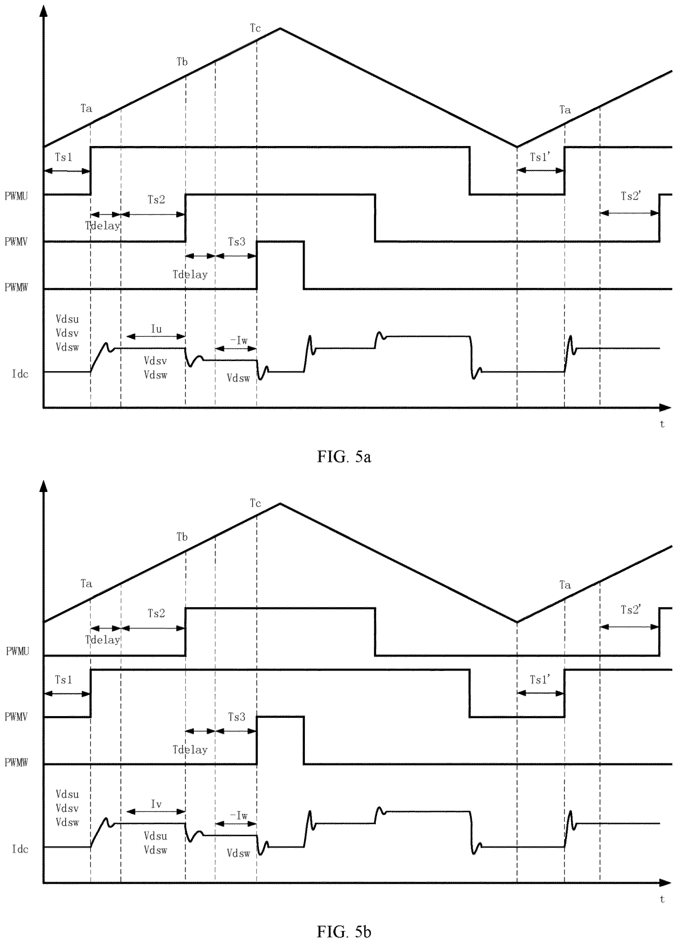

In an exemplary embodiment of the present disclosure, with reference to FIG. 5a, corresponding to different pulse width modulation (PWM) U voltage vector moment, PWM V voltage vector moment, and PWM W voltage vector moment, moments corresponding to different acquisition signals appear after current fluctuations caused by triggering of a switch signal are avoided. At a bottom of a triangle wave, a timer of the triangle wave will have a underflow interrupt, at this time instant PWM U, PWM V, and PWM W will each be 0, the upper tubes VT1, VT3, and VT5 of the three-phase bridge arm will each be turned off, and the lower tubes VT4, VT6, and VT2 of the three-phase bridge arm will each be turned on. A time period starting from this time instant and ending at a time instant of a turn-on of any one first turned-on upper tube (in the example shown in FIG. 5a, an upper tube VT1 of a U-phase bridge arm is used as the first turned-on upper tube, and Ta is a turn-on moment of the upper tube VT1 of the U-phase bridge arm) is the first sampling window time Ts1. The first sampling window time Ts1=Ta-T. Because the sampling window time is timed by another timer, an initial time T=0, i.e., Ts1=Ta.

At the end of the first sampling window time Ts1, a turn-on voltage vector changes. After the current fluctuation caused by the triggering of the switch signal is avoided, a second sampling window time Ts2 occurs. The second sampling window time Ts2 is a time period starting from a time instant of the turn-on of any one first turned-on upper tube (in the example shown in FIG. 5a, the upper tube VT1 of the U-phase bridge arm serves as the first turned-on upper tube) and a delaying of a first predetermined time Tdelay, and ending at a time instant of a turn-on of a second turned-on upper tube (in the example shown in FIG. 5a, an upper tube VT3 of a V-phase bridge arm serves as the second turned-on upper tube, and Tb is a turn-on moment of the upper tube VT3 of the V-phase bridge arm).

At the end of the second sampling window time Ts2, the turn-on voltage vector changes. After the current fluctuation caused by the triggering of the switch signal is avoided, a third sampling window time Ts3 occurs. The third sampling window time Ts3 is a time period starting from a time instant of the turn-on of the second turned-on upper tube (in the example shown in FIG. 5a, the upper tube VT3 of the V-phase bridge arm serves as the second turned-on upper tube) and the delaying of the first predetermined time Tdelay, and ending at a time instant of a turn-on of the last turned-on upper tube (in the example shown in FIG. 5a, an upper tube VT5 of a W-phase bridge arm serves as the last turned-on upper tube, and Tc is a turn-on moment of the upper tube VT5 of the W-phase bridge arm). The third sampling window time is Ts3=Tc-Tb-Tdelay.

After the sampling window times Ts1, Ts2, and Ts3 are determined, two or three of the sampling window times (e.g., the sampling window times Ts1, Ts2, and Ts3, or the sampling window times Ts2 and Ts3, etc.) may be used as the sampling duration of the tube voltage drop and the sampling duration of the phase current; or only may the sampling window time Ts3 be used as the sampling duration of the tube voltage drop and the sampling duration of the phase current.

At step S12, the tube voltage drop and the phase current of at least one phase of the electric motor when the lower tube of the at least one phase bridge arm is turned on are obtained by respectively performing voltage sampling and current sampling at the sampling duration of the tube voltage drop and the sampling duration of the phase current of the electric motor.

In an exemplary embodiment of the present disclosure, after the sampling duration of the tube voltage drop and the sampling duration of the phase current are determined, voltage sampling may be performed at the sampling duration of the tube voltage drop. In the example shown in FIG. 1, the voltage detection unit is correspondingly disposed at two terminals of the lower tube, and thus what is obtained from voltage sampling is the tube voltage drop of the corresponding lower tube. Meanwhile, current sampling is performed at the sampling duration of the phase current. In the example shown in FIG. 1, the current detection unit is correspondingly disposed at the negative electrode of the direct current bus, and the sampled current is the direct current bus current. Since the direct current bus current is related to a phase current, which is specifically determined by the turn-on time sequence, i.e., determined by a sector in which the voltage vector is located, the corresponding phase current can be obtained based on the sector in which the voltage vector is located after the direct current bus current is obtained by sampling. For example, the corresponding phase currents of direct current bus currents in different sectors where different voltage vectors are located are given in Table 1.

Table 1

| UH | VH | WH | Idc |
|----|----|----|-----|
| 1 | 0 | 0 | Iu |
| 0 | 1 | 0 | Iv |
| 0 | 0 | 1 | Iw |
| 0 | 1 | 1 | -Iu |
| 1 | 0 | 1 | -Iv |
| 1 | 1 | 0 | -Iw |
| 0 | 0 | 0 | 0 |
| 1 | 1 | 1 | 0 |

In Table 1, UH represents a turn-on situation of the upper tube of the U-phase bridge arm, VH represents a turn-on situation of the upper tube of the V-phase bridge arm, WH represents a turn-on situation of the upper tube of the W-phase bridge arm, "1" represents a turn-on, and "0" represents a turn-off, Idc is the direct current bus current, Iu is a U-phase current, Iv is a V-phase current, and Iw is a W-phase current.

At step S13, the turn-on current, when the lower tube of the at least one phase bridge arm is turned on, is determined according to the phase current of the at least one phase of the electric motor.

In an exemplary embodiment of the present disclosure, when the single resistor is used for phase current detection, two of the three-phase currents of the electric motor can be restored and obtained based on the direct current bus current obtained from sampling through Table 1, a third phase current can be calculated based on a single resistor current reconstruction technique, i.e., calculated according to the formula Iu+Iv+Iw=0, and then the turn-on current of the lower tube can be obtained based on the phase current.

It needs to be noted that when the aforementioned sampling window times Ts1, Ts2 and Ts3 are used as the sampling duration of the tube voltage drop and the sampling duration of the phase current, based on sampling results, the tube voltage drop and the turn-on current of the lower tube of each phase bridge arm can be determined.

As a first example, the determining the tube voltage drop and the turn-on current when the lower tube of each phase bridge arm is turned on comprises: obtaining, during the first sampling window time, a tube voltage drop when the lower tube of each phase bridge arm is turned on; obtaining, during the second sampling window time, a U-phase current, a tube voltage drop when a lower tube of a V-phase bridge arm is turned on, and a tube voltage drop when a lower tube of a W-phase bridge arm is turned on; obtaining, during the third sampling window time, a W-phase current or a V-phase current and the tube voltage drop when the lower tube of the W-phase bridge arm is turned on or the tube voltage drop when the lower tube of the V-phase bridge arm is turned on; determining, according to the U-phase current and the W-phase current, the V-phase current; or determining, according to the U-phase current and the V-phase current, the W-phase current; and determining, according to the U-phase current, the W-phase current, and the V-phase current, the turn-on current when the lower tube of each phase bridge arm is turned on.

In an exemplary embodiment of the present disclosure, with reference to FIG. 5a, during the first sampling window time Ts1, since the lower tubes VT4, VT6, and VT2 of the three-phase bridge arms are each turned on, the tube voltage drops of the lower tubes VT4, VT6, and VT2 can be simultaneously collected to obtain the tube voltage drops Vdsu, Vdsv, and Vdsw. Meanwhile, the direct current bus current Idc is 0, and the corresponding phase current of the electric motor is 0.

During the second sampling window time Ts2, since the upper tube of one of the three-phase bridge arms is in a turn-on state, and the lower tubes of the other two of the three-phase bridge arms are in the turn-on state, there is a current in the direct current bus. At this time, a phase current of a phase where the upper tube is located can be obtained by sampling the direct current bus current Idc, and the tube voltage drop of the lower tube can be obtained by sampling simultaneously. As shown in FIG. 5a, during the second sampling window time Ts2, the upper tube VT1 of the U-phase bridge arm is in the turn-on state. Therefore, the U-phase current Iu can be obtained by sampling the direct current bus current Idc, and the tube voltage drops Vdsv and Vdsw of the lower tubes VT6 and VT2 can be obtained through voltage sampling simultaneously.

During the third sampling window time Ts3, since the upper tubes of the two of the three-phase bridge arms are in the turn-on state, and the lower tub of the other one of the three-phase bridge arms is in the turn-on state, there is a current in the direct current bus. At this time, the phase current of the phase where the lower tube is located can be obtained by sampling the direct current bus current Idc, and the tube voltage drop of the lower tube can be obtained by sampling simultaneously. As shown in FIG. 5a, during the third sampling window time Ts3, the upper tube VT1 of the U-phase bridge arm and the upper tube VT3 of the V-phase bridge arm are each in the turn-on state. Therefore, the W-phase current Iw can be obtained by sampling the direct current bus current Idc, and the tube voltage drop Vdsw of the lower tube VT2 can be obtained through voltage sampling simultaneously. Alternatively, during the third sampling window time Ts3, the upper tube VT1 of the U-phase bridge arm and the upper tube VT5 of the W-phase bridge arm are each in the turn-on state (not shown). Therefore, the V-phase current IV can be obtained by sampling the direct current bus current Idc, and the tube voltage drop Vdsv of the lower tube VT6 can be obtained by voltage sampling simultaneously, i.e., the second turned-on upper tube may be in a V-phase or a W-phase, and the corresponding phase currents and the tube voltage drops are different when the upper tube is turned on in different phases.

It should be noted that when it appears that sampling of tube voltage drops of three lower tubes cannot be completed because the first sampling window time Ts1 is short, tube voltage drop sampling corresponding to the turn-on of the lower tube may be performed dispersedly at occurrence moments of other vectors according to a three-phase PWM turn-on relationship, i.e., a vector state. For example, the tube voltage drop sampling can be performed on the lower tube VT4 in the first sampling window time Ts1 to obtain the tube voltage drop Vdsu, the tube voltage drop sampling can be performed on the lower tube VT6 in the second sampling window time Ts2 to obtain the tube voltage drop Vdsv, and the tube voltage drop sampling can be performed on the lower tube VT2 in the third sampling window time Ts3 to obtain the tube voltage drop Vdsw. For another example, the tube voltage drop sampling can be performed on the lower tube VT4 in the first sampling window time Ts1 to obtain the tube voltage drop Vdsu, the tube voltage drop sampling can be performed on the lower tube VT2 in the second sampling window time Ts2 to obtain the tube voltage drop Vdsw, and the tube voltage drop sampling can be performed on the lower tube VT6 in the third sampling window time Ts3 to obtain the tube voltage drop Vdsv. Therefore, the tube voltage drop of each of the lower tubes is obtained.

When the U-phase current Iu and the V-phase current Iv are obtained in the aforementioned manner, the W-phase current Iw can be calculated according to a sum of the three-phase currents being zero. When the U-phase current Iu and the W-phase current Iw are obtained in the aforementioned manner, the V-phase current Iv can be calculated based on the sum of the three-phase currents being zero. After the U-phase current Iu, the V-phase current Iv, and the W-phase current Iw are obtained, it is possible to obtain that a turn-on current of the lower tube VT4 is Iu, a turn-on current of the lower tube VT6 is Iv, and a turn-on current of the lower tube VT2 is Iw.

As a second example, the determining the tube voltage drop and the turn-on current when the lower tube of each phase bridge arm in the three-phase inverter bridge is turned on comprises: obtaining, during the first sampling window time, a tube voltage drop when the lower tube of each phase bridge arm is turned on; obtaining, during the second sampling window time, a V-phase current and a tube voltage drop when a lower tube of a U-phase bridge arm is turned on and a tube voltage drop when a lower tube of a W-phase bridge arm is turned on; obtaining, during the third sampling window time, a W-phase current or a U-phase current, and the tube voltage drop when the lower tube of the W-phase bridge arm is turned on or the tube voltage drop when the lower tube of the U-phase bridge arm is turned on; determining, according to the V-phase current and the W-phase current, the U-phase current; or determining, according to the V-phase current and the U-phase current, the W-phase current; and determining, according to the U-phase current, the W-phase current, and the V-phase current, the turn-on current when the lower tube of each phase bridge arm is turned on.

In an exemplary embodiment of the present disclosure, with reference to FIG. 5b, in the first sampling window time Ts1, since the lower tubes VT4, VT6, and VT2 of the three-phase bridge arms are each turned on, the tube voltage drops of the lower tubes VT4, VT6, and VT2 can be simultaneously collected to obtain the tube voltage drops Vdsu, Vdsv, and Vdsw. Meanwhile, the direct current bus current Idc is 0, and the corresponding phase current of the electric motor is 0. In the second sampling window Ts2, the upper tube VT3 of the V-phase bridge arm is in the turn-on state. Therefore, the V-phase current Iv can be obtained by sampling the direct current bus current Idc, and at the same time, the tube voltage drops Vdsu and Vdsw of the lower tubes VT4 and VT2 can be obtained by voltage sampling. In the third sampling window Ts3, the upper tube VT1 of the U-phase bridge arm and the upper tube VT3 of the V-phase bridge arm are each in the turn-on state. Therefore, the W-phase current Iw can be obtained by sampling the direct current bus current Idc, and the tube voltage drop Vdsw of the lower tube VT2 is obtained by voltage sampling simultaneously. Alternatively, during the third sampling window time Ts3, the upper tube VT3 of the V-phase bridge arm and the upper tube VT5 of the W-phase bridge arm are each in the turn-on state (not shown). Therefore, the U-phase current Iu can be obtained by sampling the direct current bus current Idc, and the tube voltage drop Vdsu of the lower tube VT4 can be obtained through voltage sampling simultaneously.

It should be noted that when it appears that the sampling of the tube voltage drops of the three lower tubes cannot be completed because the first sampling window time Ts1 is short, the tube voltage drop sampling corresponding to the turn-on of the lower tube may be performed dispersedly at the occurrence moments of other vectors according to the three-phase PWM turn-on relationship, i.e., the vector state. For example, the tube voltage drop sampling can be performed on the lower tube VT6 in the first sampling window time Ts1 to obtain the tube voltage drop Vdsv, the tube voltage drop sampling can be performed on the lower tube VT4 in the second sampling window time Ts2 to obtain the tube voltage drop Vdsu, and the tube voltage drop sampling can be performed on the lower tube VT2 in the third sampling window time Ts3 to obtain the tube voltage drop Vdsw. For another example, the tube voltage drop sampling can be performed on the lower tube VT6 in the first sampling window time Ts1 to obtain the tube voltage drop Vdsv, the tube voltage drop sampling can be performed on the lower tube VT2 in the second sampling window time Ts2 to obtain the tube voltage drop Vdsw, and the tube voltage drop sampling can be performed on the lower tube VT4 in the third sampling window time Ts3 to obtain the tube voltage drop Vdsu. Therefore, the tube voltage drop of each of the lower tubes is obtained.

When the V-phase current Iv and the W-phase current Iw are obtained in the aforementioned manner, the U-phase current Iu can be calculated based on the sum of the three-phase currents being zero. When the V-phase current Iv and the U-phase current Iu are obtained in the aforementioned manner, the W-phase current Iw can be calculated based on the sum of the three-phase currents being zero. After the U-phase current Iu, the V-phase current Iv, and the W-phase current Iw are obtained, it can be obtained that the turn-on current of the lower tube VT4 is Iu, the turn-on current of the lower tube VT6 is Iv, and the turn-on current of the lower tube VT2 is Iw.

As a third example, the determining the tube voltage drop and the turn-on current when the lower tube of each phase bridge arm in the three-phase inverter bridge is turned on comprises: obtaining, during the first sampling window time, a tube voltage drop when the lower tube of each phase bridge arm is turned on; obtaining, during the second sampling window time, a W-phase current and a tube voltage drop when a lower tube of a U-phase bridge arm is turned on and a tube voltage drop when a lower tube of a V-phase bridge arm is turned on; obtaining, during the third sampling window time, a U-phase current or a V-phase current, and the tube voltage drop when the lower tube of the U-phase bridge arm is turned on or the tube voltage drop when the lower tube of the V-phase bridge arm is turned on; determining, according to the W-phase current and the U-phase current, the V-phase current; or determining, according to the W-phase current and the V-phase current, the U-phase current; and determining, according to the U-phase current, the W-phase current, and the V-phase current, the turn-on current when the lower tube of each phase bridge arm is turned on.

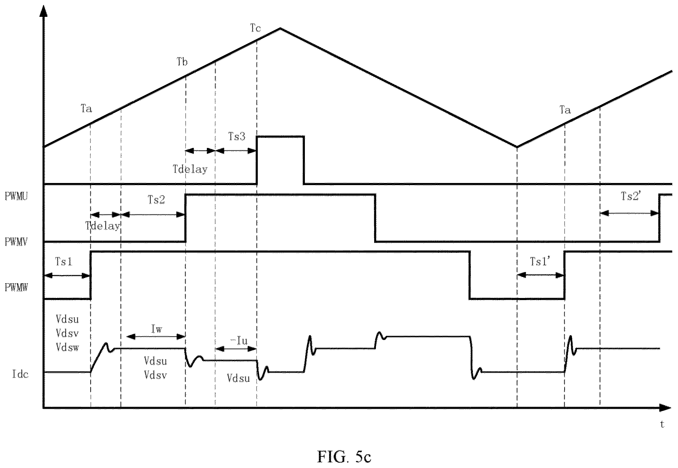

In an exemplary embodiment of the present disclosure, with reference to FIG. 5c, during the first sampling window time Ts1, since the lower tubes VT4, VT6, and VT2 of the three-phase bridge arm are each turned on, the tube voltage drops of the lower tubes VT4, VT6, and VT2 can be simultaneously collected to obtain the tube voltage drops Vdsu, Vdsv, and Vdsw. At the same time, the direct current bus current Idc is 0, and the corresponding phase current of the electric motor is 0. In the second sampling window Ts2, the upper tube VT5 of the W-phase bridge arm is in the turn-on state. Therefore, the W-phase current Iw can be obtained by sampling the direct current bus current Idc, and the tube voltage drops Vdsu and Vdsv of the lower tubes VT4 and VT6 can be obtained by voltage sampling simultaneously. In the third sampling window Ts3, the upper tube VT3 of the V-phase bridge arm and the upper tube VT5 of the W-phase bridge arm are each in the turn-on state. Therefore, the U-phase current lu can be obtained by sampling the direct current bus current Idc, and at the same time, the tube voltage drop Vdsu of the lower tube VT4 is obtained through voltage sampling. Alternatively, in the third sampling window time Ts3, the upper tube VT1 of the U-phase bridge arm and the upper tube VT5 of the W-phase bridge arm are each in the turn-on state (not shown). Therefore, the V-phase current Iv can be obtained by sampling the direct current bus current Idc, and the voltage drop Vdsv of the lower tube VT6 can be obtained through voltage sampling simultaneously.

It should be noted that, when it appears that the sampling of the tube voltage drops of the three lower tubes cannot be completed because the first sampling window time Ts1 is short, the tube voltage drop sampling corresponding to the turn-on of the lower tube may be performed dispersedly at the occurrence moments of other vectors according to the three-phase PWM turn-on relationship, i.e., the vector state. For example, the tube voltage drop sampling can be performed on the lower tube VT2 in the first sampling window time Ts1 to obtain the tube voltage drop Vdsw, the tube voltage drop sampling can be performed on the lower tube VT6 in the second sampling window time Ts2 to obtain the tube voltage drop Vdsv, and the tube voltage drop sampling can be performed on the lower tube VT4 in the third sampling window time Ts3 to obtain the tube voltage drop Vdsu. For another example, the tube voltage drop sampling can be performed on the lower tube VT2 in the first sampling window time Ts1 to obtain the tube voltage drop Vdsw, the tube voltage drop sampling can be performed on the lower tube VT4 in the second sampling window time Ts2 to obtain the tube voltage drop Vdsu, and the tube voltage drop sampling can be performed on the lower tube VT6 in the third sampling window time Ts3 to obtain the tube voltage drop Vdsv. Therefore, the tube voltage drop of each of the lower tubes is obtained.

When the u-phase current lu and the W-phase current Iw are obtained in the aforementioned manner, the V-phase current Iv can be calculated based on the sum of the three-phase currents being zero. When the V-phase current Iv and the W-phase current Iw are obtained in the aforementioned manner, the U-phase current lu can be calculated based on the sum of the three-phase currents being zero. After the U-phase current lu, the V-phase current Iv, and the W-phase current Iw are obtained, it can be obtained that the turn-on current of the lower tube VT4 is lu, the turn-on current of the lower tube VT6 is Iv, and the turn-on current of the lower tube VT2 is Iw.

A relationship between the phase currents corresponding to the direct current bus currents in the sectors where the different voltage vectors are located, and the tube voltage drops of the lower tubes that can be sampled is given in Table 2.

Table 2

| UH | VH | WH | Idc | tube voltage drops of the lower tubes that can be sampled |
|---|---|---|---|---|
| 1 | 0 | 0 | lu | Vdsv<br>Vdsw |
| 0 | 1 | 0 | Iv | Vdsu<br>Vdsw |
| 0 | 0 | 1 | Iw | Vdsu<br>Vdsv |
| 0 | 1 | 1 | -lu | Vdsu |
| 1 | 0 | 1 | -Iv | Vdsv |
| 1 | 1 | 0 | -Iw | Vdsw |
| 0 | 0 | 0 | 0 | Vdsu<br>Vdsv<br>Vdsw |
| 1 | 1 | 1 | 0 | 0 |

It needs to be noted that when the aforementioned third sampling window time Ts3 is used as the sampling duration of the tube voltage drop and the sampling duration of the phase current, based on the sampling results, the tube voltage drop and the turn-on current of the lower tube of one of the three-phases can be determined. For example, as shown in FIG. 5a and FIG. 5b, the tube voltage drop Vdsw and the turn-on current Iw of the lower tube VT2 of the W-phase bridge arm can be determined. As shown in FIG. 5c, the tube voltage drop Vdsu and the turn-on current lu of the lower tube VT4 of the U-phase bridge arm can be determined. Details are omitted herein.

A process of obtaining the junction temperature of the lower tube is illustrated below with a specific example.

In an exemplary embodiment of the present disclosure, by taking a first switch cycle shown in FIG. 5a as an example, the three sampling window times Ts1, Ts2, and Ts3 can first be calculated based on the turn-on time sequence, where Ts1=Ta-T, and Ta is a turn-on moment of the upper tube VT1 of the U-phase bridge arm. Since the sampling window time is timed by another timer, the initial time T=0, i.e., Ts1=Ta. Ts2=Tb-Ta-Tdelay, Tb is a turn-on moment of the upper tube VT3 of the V-phase bridge arm, and Tdelay is the first predetermined time. Ts3=Tb-Ta-Tdelay, and Tc is a turn-on moment of the upper tube VT5 of the W-phase bridge arm.

When underflow interruption occurs in the timer of the triangle wave, i.e., when PWM underflow interruption starts, it enters the first sampling window time Ts1, at which time, a timing time of a sampling timer is set to be Ta+Tdelay, and the sampling timer is activated (a counting pulse of the sampling timer can be at a same frequency as a PWM pulse). At the same time, sampling of the tube voltage drop of the lower tube starts to sample the tube voltage drops of one or more lower tubes. For example, the tube voltage drops Vdsu, Vdsv, and Vdsw are obtained by sampling the tube voltage drops of lower tubes VT4, VT6, and VT2 and saved. When the timing time of the sampling timer reaches Ta+Tdelay and enters the second sampling window time Ts2, the timing time of the sampling timer is set to Ts2+Tdelay, and the sampling timer is started. At the same time, the tube voltage drops Vdsv and Vdsw of the lower tube VT6 and the lower tube VT2 and the U-phase current Iu are obtained by starting sampling the tube voltage drops of the lower tube VT6 and the lower tube VT2 and the direct current bus current Idc and are saved. When the timing time of the sampling timer reaches Ts2+Tdelay and enters the third sampling window Ts3, the tube voltage drop Vdsw of the lower tube VT2 and the W-phase current Iw are obtained by starting sampling the tube voltage drop of the lower tube VT2 and the direct current bus current Idc and are saved. Finally, the whole sampling of one switch cycle is completed, and then the V-phase current Iv can be calculated according to Iu+Iv+Iw=0. The tube voltage drops Vdsu, Vdsv, and Vdsw and the turn-on currents Iu, Iv, and Iw of the three lower tubes VT4, VT6, and VT2 are obtained when the three lower tubes VT4, VT6, and VT2 are turned on. Further, the turn-on resistances of the three lower tubes VT4, VT6, and VT2 are calculated based on the aforementioned formula (1), and the junction temperatures of the three lower tubes VT4, VT6, and VT2 are obtained by searching the table based on the turn-on resistances and a predetermined relationship curve between turn-on resistances matched with the lower tube model and junction temperatures. The detection for the junction temperatures of lower tubes in one cycle is completed.

It should be noted that a junction temperature detection process for other switch cycles is the same as that for the first switch cycle, so details are omitted herein.

In the above embodiment, during electric motor control process, based on the turn-on time sequence, through respective calculation of the sampling window time in different voltage vector times, by respectively sampling the current of the corresponding phase and the tube voltage drop of the lower tube during the sampling window time, the three-phase current is restored in the case of single resistor current sampling according to a characteristic where the phase current is zero. Further, the turn-on current of the lower tube is obtained according to the three-phase current. Then, the turn-on resistance can be calculated according to the turn-on current and tube voltage drop, and the junction temperature of the lower tube can be obtained according to the turn-on resistance and the relationship curve between the turn-on resistance and junction temperature. Because of a short current sampling period, a high-speed response can be made to the temperature change of the switch tube, which overcomes the problems of slow response, poor accuracy, and low reliability of the junction temperature of the switch tube indirectly obtained by bypassing the temperature resistance. Therefore, it has a higher value in engineering applications.

It should be noted that, in order to provide comprehensive protection for each switch tube, in the aforementioned example, a corresponding voltage sampling unit is provided for each lower tube. The tube voltage drop of the lower tube is sampled through the voltage sampling unit. Further, the turn-on resistance of each lower tube is obtained based on the tube voltage drop of each lower tube, to obtain the junction temperature of the lower tube. The sampling form is not limited to tube voltage drop sampling of all the lower tubes and can also be presuming the junction temperatures of all the lower tubes by sampling the tube voltage drop of one lower tube or tube voltage drops of two lower tubes, to reduce the cost.

In some embodiments of the present disclosure, after determining the junction temperature of the lower tube, the method for detecting the junction temperature of the switch tube may further comprise performing instantaneous over-temperature protection and inverse-time-limit overload protection according to the junction temperature of the lower tube.

It needs to be noted that the instantaneous over-temperature protection refers to a kind of protection that immediately protects the switch tube when the junction temperature of the switch tube meets an over-temperature protection condition. The inverse-time-limit overload protection refers to the protection having different action time limits for different junction temperatures when the junction temperature of the switch tube meets the overload protection condition. The higher the junction temperature, the shorter the action time limit. The lower the junction temperature, the longer the action time limit. After the junction temperature of the lower tube is obtained, inverse-time-limit overload protection and/or instantaneous over-temperature protection may be performed based on the junction temperature of the lower tube, preferably both protections being performed simultaneously.

In some embodiments, the performing instantaneous over-temperature protection according to the junction temperature of the lower tube comprises: controlling the three-phase inverter bridge to stop outputting when the junction temperature of the lower tube is greater than a predetermined maximum protection temperature (the predetermined maximum protection temperature may be set according to the actual situation, which may be specifically determined according to the model of the switch tube).

In an exemplary embodiment of the present disclosure, after the junction temperature of the lower tube is obtained in the aforementioned manner, it is determined whether the junction temperature of the lower tube meets the over-temperature protection condition. For example, it is determined whether the junction temperature of the lower tube is greater than or equal to the predetermined maximum protection temperature Tmax. When the junction temperature of the lower tube is greater than or equal to the predetermined maximum protection temperature Tmax, it means that the current junction temperature reaches a temperature withstand limit of the switch tube. When the operation is continued, it may lead to the damage to the switch tube. At this time, the protection action is immediately performed, i.e., the three-phase inverter bridge is controlled to stop operation, i.e., a control signal (e.g., the PWM signal) of the switch tubes of the three-phase inverter bridge is immediately turned off, to stop driving the switch tube to operate. In this way, the three-phase inverter bridge is made stop operation. Therefore, the instantaneous over-temperature protection on the three-phase inverter bridge is realized. At the same time, an over-temperature alarm warning can also be performed.

In some embodiments, the performing inverse-time-limit overload protection according to the junction temperature of the lower tube may comprise: determining an inverse-time-limit protection curve and performing overload protection timing according to a relationship between the junction temperature of the lower tube and the inverse-time-limit protection curve; and controlling, when a timing time arrives, the three-phase inverter bridge to stop outputting. The timing time is inversely related to the junction temperature of the lower tube, i.e., the higher the junction temperature of the lower tube, the shorter the timing time, and the lower the junction temperature of the lower tube, the longer the timing time.

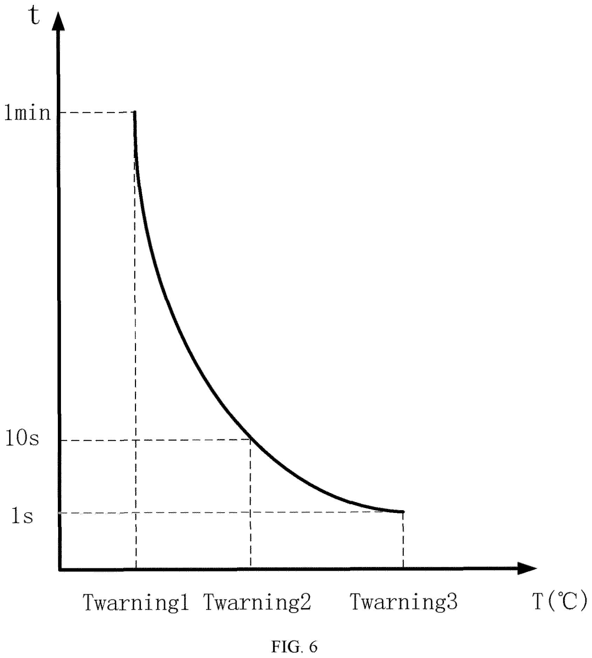

In an exemplary embodiment of the present disclosure, the inverse-time-limit protection curve may be determined based on the characteristics of the switch tube, i.e., temperature characteristic points. For example, three warning temperatures may first be set based on the temperature characteristic point as a first warning temperature Twarning1, a second warning temperature Twarning2, and a third warning temperature Twarning3, respectively. Moreover, a timing time corresponding to the first warning temperature Twarning1 is 1 minute, a timing time corresponding to the second warning temperature Twarning2 is 10 seconds, and a timing time corresponding to the third warning temperature Twarning3 is 1 second. A timing time between the first warning temperature Twarning1 and the second warning temperature Twarning2 is smaller than 1 minute and greater than 10 seconds. A timing time between the second warning temperature Twarning2 and the third warning temperature Twarning3 is smaller than 10 seconds and greater than 1 second. As shown in FIG. 6, an inverse-time-limit protection curve is ultimately formed.

After a junction temperature Tj of a lower tube is obtained in the aforesaid manner, the junction temperature Tj of the lower tube is judged. When the obtained junction temperature Tj of the lower tube is equal to the first warning temperature Twarning1 in the inverse-time-limit protection curve, a 1-minute overload protection timing is initiated. When the timing time reaches 1 minute, the protection action is executed, i.e., the three-phase inverter bridge is controlled not to operate, and an overload alarm warning can be performed simultaneously.

When the obtained junction temperature Tj of the lower tube is greater than the first warning temperature Twarning1 and smaller than the second warning temperature Twarning2 in the inverse-time-limit protection curve, the corresponding timing time is obtained according to the junction temperature of the lower tube in accordance with the inverse-time-limit protection curve in a table searching manner (the inverse-time-limit protection curve can be converted in advance to a relationship data table between the junction temperature of the lower tube and the timing time and is obtained through table searching). The timing time is smaller than 1 minute and greater than 10 seconds, and the overload protection timing is initiated based on the timing time. When the timing time reaches, the protection action is executed, i.e., the three-phase inverter bridge is controlled not to operate, and the overload alarm warning can also be performed simultaneously.

When the obtained lower tube temperature Tj is equal to the second warning temperature Twarning2, an overload protection timing of 10 seconds is initiated. When the timing time reaches 10 seconds, a protection action is executed, i.e., the three-phase inverter bridge is controlled not to operate, and the overload alarm warning can also be performed simultaneously.

When the obtained junction temperature Tj of the lower tube is greater than the second warning temperature Twarning2 and smaller than the third warning temperature Twarning3 in the inverse-time-limit protection curve, the corresponding timing time is obtained according to the junction temperature of the lower tube in accordance with the inverse-time-limit protection curve in the table searching manner. The timing time is smaller than 10 seconds and greater than 1 second, and the overload protection timing is initiated based on the timing time. When the timing time reaches, the protection action is executed, i.e., the three-phase inverter bridge is controlled not to operate, and the overload alarm warning can also be performed simultaneously.

When the obtained lower tube temperature Tj is equal to the third warning temperature Twarning3, an overload protection timing of 1 second is initiated. When the timing time reaches 1 second, the protection action is executed, i.e., the three-phase inverter bridge is controlled not to operate, and the overload alarm warning can also be performed simultaneously.

It needs to be noted that when the lower tube temperature is not within an overload temperature range during the timing time, i.e., when the temperature of the lower tube is not between the first warning temperature Twarning1 and the third warning temperature Twarning3, no protection action is performed, i.e., after a time reaching the triggering of the temperature overload protection is determined through comparison of the obtained temperature of the lower tube with respective warning temperatures, the overload protection is performed when the temperature is always within the overload temperature range and a delay time is reached, and the overload alarm warning can be performed simultaneously. In addition, a maximum warning temperature corresponding to the inverse-time-limit overload protection is smaller than the predetermined maximum protection temperature corresponding to the instantaneous over-temperature protection. For example, the third warning temperature Twarning3 is smaller than the predetermined maximum protection temperature Tmax. It can be understood that the instantaneous over-temperature protection can also be used as a special case of the inverse-time-limit overload protection, with a corresponding timing time being 0 second.

It needs to be noted that in some embodiments, after the junction temperature of the lower tube is obtained, the junction temperature is also filtered and the temperature protection is then performed based on the junction temperature. In an exemplary embodiment of the present disclosure, during actual applications, because of a complex electromagnetic environment where the application itself is located, in a process of collecting the tube voltage drop acquisition signal and the phase current signal of each phase of the electric motor, there may be interference burrs such as signal noise from space radiation and line conduction, causing junction temperature data to fluctuate up and down within a predetermined range. In order to ensure that the temperature protection action operates stably within the inverse-time-limit protection curve, i.e., a protection value needs to be reasonably filtered, after the junction temperature of the lower tube is obtained, the junction temperature is also filtered, and then the temperature protection is performed based on the junction temperature.

As a specific example, the example shown in FIG. 5a is still used as an example. After the junction temperature of each of the lower tubes VT4, VT6, and VT2 is obtained, the junction temperature of each of the lower tubes VT4, VT6, and VT2 is compared with the predetermined maximum protection temperature Tmax. When the junction temperature of any one of the lower tubes VT4, VT6, and VT2 is greater than or equal to the predetermined maximum protection temperature Tmax, the protection action is immediately executed, i.e., the three-phase inverter bridge is controlled to stop operation, and the over-temperature alarm warning is performed. When the junction temperature of each of the lower tubes VT4, VT6, and VT2 is smaller than the predetermined maximum protection temperature Tmax, the overload protection is performed on each lower tube based on the inverse-time-limit protection curve. For example, when the junction temperature of the lower tube VT4 is equal to the first warning temperature Twarning1, a 1-minute overload protection timing is initiated. When the timing time reaches 1 minute, the protection action is executed, i.e., the three-phase inverter bridge is controlled to stop operation, and the over-temperature alarm warning is performed. When the junction temperature of the lower tube VT4 is greater than the first warning temperature Twarning1 and smaller than the second warning temperature Twarning2, the corresponding timing time is obtained by searching the table based on the inverse-time-limit protection curve. When the timing time is reached, the protection action is executed, and the overload alarm warning is performed. Details are omitted herein, and are not enumerated here. The inverse-time-limit overload protection for the lower tube VT6 and the lower tube VT2 are the same as the inverse-time-limit overload protection for the lower tube VT4, and details are omitted herein

In the above embodiment, after the junction temperature of the lower tube is obtained, the inverse-time-limit overload protection and the instantaneous overload protection, i.e., the hottest-temperature instantaneous protection are also performed based on the junction temperature, which can effectively avoid the damage of the three-phase inverter bridge because of the too high temperature, and realize reliable temperature protection for the three-phase inverter bridge.

In summary, the method for detecting the junction temperature of the switch tube according to the embodiments of the present disclosure shares multi-phase and simultaneous temperature detection and protection through current time-sampling technology, has characteristics of fast and efficient detection for the internal temperature, i.e., the junction temperature of each lower tube, small temperature deviation, and fast response speed, and overcomes the problems of slow response, poor accuracy, and low reliability of the junction temperature of the switch tube indirectly obtained by providing the temperature resistance aside. Moreover, the method is simple and easy to realize, and has high engineering application values.

In some embodiments of the present disclosure, an electric motor controller is provided. The electric motor controller comprises a processor, a memory, and a switch-tube junction-temperature detection program that is stored in the memory and executable on the processor. The switch-tube junction-temperature detection program, when executed by the processor, implements the method for detecting the junction temperature of the switch tube as described above.

The electric motor controller according to the embodiments of the present disclosure, based on the aforementioned method for detecting the junction temperature of the switch tube, shares the multi-phase and simultaneous temperature detection and protection through the current time-sampling technology, has characteristics of fast and efficient detection for the internal temperature, i.e., the junction temperature of each lower tube, small temperature deviation, and fast response speed, and overcomes the problems of slow response, poor accuracy, and low reliability of the junction temperature of the switch tube indirectly obtained by providing the temperature resistance aside. Moreover, the method is simple and easy to realize, and has high engineering application values.

In some embodiments of the present disclosure, a computer-readable storage medium is provided. The computer-readable storage medium has a switch-tube junction-temperature detection program stored thereon. The switch-tube junction-temperature detection program, when executed by a processor, implements the method for detecting the junction temperature of the switch tube as described above.

The computer-readable storage medium according to the embodiments of the present disclosure, based on the aforementioned method for detecting the junction temperature of the switch tube, shares the multi-phase and simultaneous temperature detection and protection through the current time-sampling technology, has characteristics of fast and efficient detection for the internal temperature, i.e., the junction temperature of each lower tube, small temperature deviation, and fast response speed, and overcomes the problems of slow response, poor accuracy, and low reliability of the junction temperature of the switch tube indirectly obtained by providing the temperature resistance aside. Moreover, the method is simple and easy to realize, and has high engineering application values.

In some embodiments of the present disclosure, an electric motor control system is also provided. Referring to FIG. 1, the electric motor control system comprises an electric motor (not shown), a three-phase inverter bridge 10, a current detection unit 20, a first voltage detection unit 30, a second voltage detection unit 40, a third voltage detection unit 50, and a control unit (not specifically shown).

The three-phase inverter bridge 10 is connected between direct current buses and drives the electric motor to operate. The current detection unit 20 is disposed corresponding to a negative electrode of the direct current bus and configured to detect a direct current bus current. The first voltage detection unit 30 is disposed corresponding to a lower tube of a U-phase bridge arm in the three-phase inverter bridge 10 and configured to detect a lower tube voltage drop of the U-phase bridge arm, i.e., a voltage drop of the lower tube VT4. The second voltage detection unit 40 is disposed corresponding to a lower tube of a V-phase bridge arm in the three-phase inverter bridge 10 and configured to detect a lower tube voltage drop of the V-phase bridge arm, i.e., a voltage drop of the lower tube VT6. The third voltage detection unit 50 is disposed corresponding to a lower tube of a W-phase bridge arm in the three-phase inverter bridge 10 and configured to detect a lower tube voltage drop of the W-phase bridge arm, i.e., a voltage drop of the lower tube VT2. The control unit is configured to: determine, according to the direct current bus current, a turn-on current when a lower tube of at least one phase bridge arm in the three-phase inverter bridge 10 is turned on; obtain a tube voltage drop when a lower tube of at least one phase bridge arm in the three-phase inverter bridge 10 is turned on; determine, according to the tube voltage drop and the turn-on current, a turn-on resistance when the lower tube of the at least one phase bridge arm is turned on; and determine, according to the turn-on resistance, a junction temperature of a lower tube of the at least one phase bridge arm.

According to an embodiment of the present disclosure, the control unit is specifically configured to: determine, according to a turn-on time sequence of the switch tube in the three-phase inverter bridge, a sampling duration of the tube voltage drop and a sampling duration of the phase current of the electric motor; obtain the tube voltage drop and at least one phase of the electric motor when the lower tube of the phase current of the at least one phase bridge arm is turned on by respectively performing voltage sampling and current sampling at the sampling duration of the tube voltage drop and the sampling duration of the phase current of the electric motor; and determine, according to the phase current of the at least one phase of the electric motor, the turn-on current when the lower tube of the at least one phase bridge arm is turned on.

According to an embodiment of the present disclosure, the control unit is specifically configured to determine, according to the turn-on time sequence of the switch tube in the three-phase inverter bridge, a first sampling window time, a second sampling window time, and a third sampling window time. The first sampling window time is a time period starting from a time instant of a turn-on of each of lower tubes of a three-phase bridge arm in the three-phase inverter bridge and ending at a time instant of a turn-on of an upper tube of any phase bridge arm in the three-phase inverter bridge. The second sampling window time is a time period starting from a time instant of a turn-on of an upper tube of any phase bridge arm in the three-phase inverter bridge and a delaying of a first predetermined time, and ending at a time instant of a turn-on of an upper tube of a next phase bridge arm in the three-phase inverter bridge. The third sampling window time is a time period starting from a time instant of the turn-on of the upper tube of the next phase bridge arm in the three-phase inverter bridge and the delaying of the first predetermined time, and ending at a time instant of a turn-on of an upper tube of the last phase bridge arm in the three-phase inverter bridge. The control unit is specifically configured to: taking at least two of the first sampling window time, the second sampling window time, and the third sampling window time as the sampling duration of the tube voltage drop and the sampling duration of the phase current; or taking the third sampling window time as the sampling duration of the tube voltage drop and the sampling duration of the phase current.

According to an embodiment of the present disclosure, when the first sampling window time, the second sampling window time, and the third sampling window time are all used as the sampling duration of the tube voltage drop and the sampling duration of the phase current, the control unit determines the tube voltage drop and the turn-on current when the lower tube of each phase bridge arm in the three-phase inverter bridge is turned on.

According to an embodiment of the present disclosure, the control unit is specifically configured to: obtain, during the first sampling window time, a tube voltage drop when the lower tube of each phase bridge arm is turned on; obtain, during the second sampling window time, a U-phase current, a tube voltage drop when a lower tube of a V-phase bridge arm is turned on, and a tube voltage drop when a lower tube of a W-phase bridge arm is turned on; obtain, during the third sampling window time, a W-phase current or a V-phase current and the tube voltage drop when the lower tube of the W-phase bridge arm is turned on or the tube voltage drop when the lower tube of the V-phase bridge arm is turned on; determine, according to the U-phase current and the W-phase current, the V-phase current; or determine, according to the U-phase current and the V-phase current, the W-phase current; and determine, according to the U-phase current, the W-phase current, and the V-phase current, the turn-on current when the lower tube of each phase bridge arm is turned on.

According to another embodiment of the present disclosure, the control unit is specifically configured to: obtain, during the first sampling window time, a tube voltage drop when the lower tube of each phase bridge arm is turned on; obtain, during the second sampling window time, a V-phase current and a tube voltage drop when a lower tube of a U-phase bridge arm is turned on and a tube voltage drop when a lower tube of a W-phase bridge arm is turned on; obtain, during the third sampling window time, a W-phase current or a U-phase current, and the tube voltage drop when the lower tube of the W-phase bridge arm is turned on or the tube voltage drop when the lower tube of the U-phase bridge arm is turned on; determine, according to the V-phase current and the W-phase current, the U-phase current; or determine, according to the V-phase current and the U-phase current, the W-phase current; and determine, according to the U-phase current, the W-phase current, and the V-phase current, the turn-on current when the lower tube of each phase bridge arm is turned on.

According to yet another embodiment of the present disclosure, the control unit is specifically configured to: obtain, during the first sampling window time, a tube voltage drop when the lower tube of each phase bridge arm is turned on; obtain, during the second sampling window time, a W-phase current and a tube voltage drop when a lower tube of a U-phase bridge arm is turned on and a tube voltage drop when a lower tube of a V-phase bridge arm is turned on; obtain, during the third sampling window time, a U-phase current or a V-phase current, and the tube voltage drop when the lower tube of the U-phase bridge arm is turned on or the tube voltage drop when the lower tube of the V-phase bridge arm is turned on; determine, according to the W-phase current and the U-phase current, the V-phase current; or determine, according to the W-phase current and the V-phase current, the U-phase current; and determine, according to the U-phase current, the W-phase current, and the V-phase current, the turn-on current when the lower tube of each phase bridge arm is turned on.

According to an embodiment of the present disclosure, the control unit is further configured to perform instantaneous over-temperature protection and inverse-time-limit overload protection according to the junction temperature of the lower tube.

According to an embodiment of the present disclosure, the control unit is specifically configured to control the three-phase inverter bridge to stop outputting when the junction temperature of the lower tube is greater than a predetermined maximum protection temperature.

According to an embodiment of the present disclosure, the control unit is specifically configured to: determine an inverse-time-limit protection curve and perform overload protection timing according to a relationship between the junction temperature of the lower tube and the inverse-time-limit protection curve; and control, when a timing time arrives, the three-phase inverter bridge to stop outputting.

According to an embodiment of the present disclosure, the timing time is inversely related to the junction temperature of the lower tube.

It should be noted that for a description of the electric motor control system of the present disclosure, please refer to the description of the method for detecting the junction temperature of the switch tube in the present disclosure, and the details are omitted herein.

The electric motor control system according to the embodiments of the present disclosure shares the multi-phase and simultaneous temperature detection and protection through the current time-sampling technology, has characteristics of fast and efficient detection for the internal temperature, i.e., the junction temperature of each lower tube, small temperature deviation, and fast response speed, and overcomes the problems of slow response, poor accuracy, and low reliability of the junction temperature of the switch tube indirectly obtained by providing the temperature resistance aside. Moreover, the method is simple and easy to realize, and has high engineering application values.

It should be noted that the logic and/or step described in other manners herein or shown in the flowchart, for example, a particular sequence table of executable instructions for realizing the logical function, may be specifically realized in any computer readable medium to be used by the instruction execution system, device or equipment (such as the system based on computers, the system comprising processors or other systems capable of obtaining the instructions from the instruction execution system, device and equipment and executing the instructions), or to be used in combination with the instruction execution system, device and equipment. As to the specification, "the computer readable medium" may be any device adaptive for comprising, storing, communicating, propagating or transferring programs to be used by or in combination with the instruction execution system, device or equipment. More specific examples of the computer readable medium comprise but are not limited to: an electronic connection (an electronic device) with one or a plurality of wires, a portable computer disk case (a magnetic device), a random access memory (RAM), a read only memory (ROM), an erasable programmable read-only memory (EPROM or a flash memory), an optical fiber device and a portable compact disk read-only memory (CDROM). In addition, the computer readable medium may even be a paper or other appropriate medium capable of being printed with programs thereon, this is because, for example, the paper or other appropriate medium may be optically scanned and then edited, decrypted or processed with other appropriate methods when necessary to obtain the programs in an electric manner, and then the programs may be stored in the computer memory.

It should be understood that each part of the present disclosure may be realized by the hardware, software, firmware or their combination. In the above embodiments, a plurality of steps or methods may be realized by the software or firmware stored in the memory and executed by the appropriate instruction execution system. For example, if it is realized by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), etc.

In the description of this specification, descriptions with reference to the terms "an embodiment", "some embodiments", "examples", "specific examples", or "some examples" etc., mean that specific features, structure, materials or characteristics described in conjunction with the embodiment or example are comprised in at least one embodiment or example of the present disclosure. In this specification, the schematic representations of the above terms do not necessarily refer to the same embodiment or example. Moreover, the described specific features, structures, materials or characteristics may be combined in any one or more embodiments or examples in a suitable manner.

In addition, the terms "first" and "second" are only used for descriptive purposes, and cannot be understood as indicating or implying relative importance or implicitly indicating the number of indicated technical features. Therefore, the features defined with "first" and "second" may explicitly or implicitly comprise at least one of the features. In the description of the present disclosure, "a plurality of" means at least two, such as two, three, etc., unless otherwise specifically defined.

In the description of the embodiments of the present disclosure, unless specified or limited otherwise, the technical terms "mounted," "connected," "coupled" and "fixed" are understood broadly, such as a fixed connection or a detachable connection or connection as one piece; mechanical connection or electrical connection; direct connection or indirect connection through an intermediate; internal communication of two components or the interaction relationship between two components. For those skilled in the art, the specific meaning of the above-mentioned terms in the embodiments of the present disclosure can be understood according to specific circumstances.

Although embodiments according to the present disclosure have been shown and described, it would be appreciated by those skilled in the art that the above embodiments are illustrative and cannot be construed to limitation on the present disclosure, and changes, alternatives, modifications, and variations can be made in the embodiments without departing from scope of the present disclosure.

**Claims**

1. A method for detecting a junction temperature of a switch tube in an electric motor control system, wherein the electric motor control system comprising a three-phase inverter bridge driving an electric motor to operate, the method comprising:

    determining a tube voltage drop and a turn-on current when a lower tube of at least one phase bridge arm in the three-phase inverter bridge is turned on;
    determining, according to the tube voltage drop and the turn-on current, a turn-on resistance when the lower tube of the at least one phase bridge arm is turned on; and
    determining, according to the turn-on resistance, a junction temperature of the lower tube of the at least one phase bridge arm.

2. The method according to claim 1, wherein said determining the tube voltage drop and the turn-on current when the lower tube of the at least one phase bridge arm in the three-phase inverter bridge is turned on comprises:

determining, according to a turn-on time sequence of the switch tube in the three-phase inverter bridge, a sampling duration of the tube voltage drop and a sampling duration of a phase current of the electric motor;

obtaining the tube voltage drop and the phase current of at least one phase of the electric motor when the lower tube of the at least one phase bridge arm is turned on, by respectively performing a voltage sampling at the sampling moment of the tube voltage drop and performing a current sampling at the sampling duration of the phase current of the electric motor; and

determining, according to the phase current of the at least one phase of the electric motor, the turn-on current when the lower tube of the at least one phase bridge arm is turned on.

3. The method according to claim 2, wherein in response to performing an electric motor phase current detection by using a single resistor, said determining, according to the turn-on time sequence of the switch tube in the three-phase inverter bridge, the sampling duration of the tube voltage drop and the sampling duration of the phase current of the electric motor comprises:

determining, according to the turn-on time sequence of the switch tube in the three-phase inverter bridge, a first sampling window time, a second sampling window time, and a third sampling window time, wherein the first sampling window time is a time period starting from a time instant of a turn-on of each of the lower tubes of three phase bridge arms in the three-phase inverter bridge and ending at a time instant of a turn-on of an upper tube of any phase bridge arm in the three-phase inverter bridge, wherein the second sampling window time is a time period starting from a time instant of a turn-on of an upper tube of any phase bridge arm in the three-phase inverter bridge and a delaying of a first predetermined time, and ending at a time instant of a turn-on of an upper tube of a next phase bridge arm in the three-phase inverter bridge, and wherein the third sampling window time is a time period starting from a time instant of the turn-on of the upper tube of the next phase bridge arm in the three-phase inverter bridge and the delaying of the first predetermined time, and ending at a time instant of a turn-on of an upper tube of a last phase bridge arm in the three-phase inverter bridge; and

taking at least two of the first sampling window time, the second sampling window time, and the third sampling window time as the sampling duration of the tube voltage drop and the sampling duration of the phase current; or taking the third sampling window time as the sampling duration of the tube voltage drop and the sampling duration of the phase current.

4. The method according to claim 3 comprises, when the first sampling window time, the second sampling window time, and the third sampling window time are all used as the sampling duration of the tube voltage drop and the sampling duration of the phase current:
determining the tube voltage drop and the turn-on current when the lower tube of each phase bridge arm in the three-phase inverter bridge is turned on.

5. The method according to claim 4, wherein said determining the tube voltage drop and the turn-on current when the lower tube of each phase bridge arm in the three-phase inverter bridge is turned on comprises:

obtaining, during the first sampling window time, the tube voltage drop when the lower tube of each phase bridge arm is turned on;

obtaining, during the second sampling window time, a U-phase current, the tube voltage drop when a lower tube of a V-phase bridge arm is turned on, and the tube voltage drop when a lower tube of a W-phase bridge arm is turned on;

obtaining, during the third sampling window time, a W-phase current or a V-phase current and the tube voltage drop when the lower tube of the W-phase bridge arm is turned on or the tube voltage drop when the lower tube of the V-phase bridge arm is turned on;

determining, according to the U-phase current and the W-phase current, the V-phase current; or determining, according to the U-phase current and the V-phase current, the W-phase current; and

determining, according to the U-phase current, the W-phase current, and the V-phase current, the turn-on current when the lower tube of each phase bridge arm is turned on.

6. The method according to claim 4, wherein said determining the tube voltage drop and the turn-on current when the lower tube of each phase bridge arm in the three-phase inverter bridge is turned on comprises:

obtaining, during the first sampling window time, the tube voltage drop when the lower tube of each phase bridge arm is turned on;

obtaining, during the second sampling window time, a V-phase current and the tube voltage drop when a lower tube of a U-phase bridge arm is turned on and the tube voltage drop when a lower tube of a W-phase bridge arm is turned on;

obtaining, during the third sampling window time, a W-phase current or a U-phase current, and the tube voltage drop when the lower tube of the W-phase bridge arm is turned on or the tube voltage drop when the lower tube of the U-phase bridge arm is turned on;

determining, according to the V-phase current and the W-phase current, the U-phase current; or determining, according to the V-phase current and the U-phase current, the W-phase current; and

determining, according to the U-phase current, the W-phase current, and the V-phase current, the turn-on current when the lower tube of each phase bridge arm is turned on.

7.  The method according to claim 4, wherein said determining the tube voltage drop and the turn-on current when the lower tube of each phase bridge arm in the three-phase inverter bridge is turned on comprises:

obtaining, during the first sampling window time, the tube voltage drop when the lower tube of each phase bridge arm is turned on;

obtaining, during the second sampling window time, a W-phase current and the tube voltage drop when a lower tube of a U-phase bridge arm is turned on and the tube voltage drop when a lower tube of a V-phase bridge arm is turned on;

obtaining, during the third sampling window time, a U-phase current or a V-phase current, and the tube voltage drop when the lower tube of the U-phase bridge arm is turned on or the tube voltage drop when the lower tube of the V-phase bridge arm is turned on;

determining, according to the W-phase current and the U-phase current, the V-phase current; or determining, according to the W-phase current and the V-phase current, the U-phase current; and

determining, according to the U-phase current, the W-phase current, and the V-phase current, the turn-on current when the lower tube of each phase bridge arm is turned on.

8.  The method according to any one of claims 1 to 7, further comprising, subsequent to determining the junction temperature of the lower tube:
performing instantaneous over-temperature protection and inverse-time-limit overload protection according to the junction temperature of the lower tube.

9.  The method according to claim 8, said performing instantaneous over-temperature protection according to the junction temperature of the lower tube comprises:
controlling the three-phase inverter bridge to stop outputting when the junction temperature of the lower tube is greater than a predetermined maximum protection temperature.

10. The method according to claim 8, wherein said performing inverse-time-limit overload protection according to the junction temperature of the lower tube comprises:

determining an inverse-time-limit protection curve and performing overload protection timing according to a relationship between the junction temperature of the lower tube and the inverse-time-limit protection curve; and controlling, when a timing time arrives, the three-phase inverter bridge to stop outputting.

11. The method according to claim 10, wherein the timing time is inversely related to the junction temperature of the lower tube.

12. An electric motor controller, comprising:

a memory;
a processor; and
a switch-tube junction-temperature detection program for detecting a junction temperature of a switch tube in an electric motor control system that is stored in the memory and executable on the processor, the switch-tube junction-temperature detection program, when executed by the processor, implementing a method for detecting the junction temperature of the switch tube in the electric motor control system according to any one of claims 1 to 11.

13. A computer-readable storage medium, having a switch-tube junction-temperature detection program for detecting a junction temperature of a switch tube in an electric motor control system stored thereon, the switch-tube junction-temperature detection program, when executed by a processor, implementing a method for detecting the junction temperature of the switch tube in the electric motor control system according to any one of claims 1 to 11.

14. An electric motor control system, comprising:

an electric motor;
a three-phase inverter bridge connected between direct current buses and driving the electric motor to operate;
a current detection unit disposed corresponding to a negative electrode of the direct current bus and configured to detect a direct current bus current;
a first voltage detection unit disposed corresponding to a lower tube of a U-phase bridge arm in the three-phase inverter bridge and configured to detect a lower tube voltage drop of the U-phase bridge arm;
a second voltage detection unit disposed corresponding to a lower tube of a V-phase bridge arm in the three-phase inverter bridge and configured to detect a lower tube voltage drop of the V-phase bridge arm;
a third voltage detection unit disposed corresponding to a lower tube of a W-phase bridge arm in the three-phase inverter bridge and configured to detect a lower tube voltage drop of the W-phase bridge arm; and
a control unit configured to:

determine, according to the direct current bus current, a turn-on current when a lower tube of at least one phase bridge arm in the three-phase inverter bridge is turned on,
obtain a tube voltage drop when the lower tube of at least one phase bridge arm in the three-phase inverter bridge is turned on,
determine, according to the tube voltage drop and the turn-on current, a turn-on resistance when the lower tube of the at least one phase bridge arm is turned on, and
determine, according to the turn-on resistance, a junction temperature of the lower tube of the at least one phase bridge arm.

10

VT1 VT3 VT5

Direct
current bus

C +

U V W

50

VT4 VT6 VT2

Third
voltage
detection
unit

R

Current
detection
unit

20

First
voltage
detection
unit

Second
voltage
detection
unit

30 40

FIG. 1

Determining a tube voltage drop and a turn-on current when a
lower tube of at least one phase bridge arm in the three-phase
inverter bridge is turned on

S10

Determining, according to the tube voltage drop and the turn-
on current, a turn-on resistance when the lower tube of the at
least one phase bridge arm is turned on

S20

Determining, according to the turn-on resistance, a junction
temperature of a lower tube of the at least one phase bridge arm

S30

FIG. 2

FIG. 3

| Determining, according to a turn-on time sequence of the switch tube in the three-phase inverter bridge, a sampling duration of the tube voltage drop and a sampling duration of a phase current of the electric motor | S11 |

| Obtaining the tube voltage drop and at least one phase current of the motor when the lower tube of the at least one phase bridge arm is turned on by respectively performing voltage sampling and current sampling at the sampling duration of the tube voltage drop and the sampling duration of the phase current of the electric motor | S12 |

| Determining, according to the at least one phase phase current of the electric motor, the turn-on current when the lower tube of the at least one phase bridge arm is turned on | S13 |

FIG. 4

FIG. 5a

FIG. 5b

FIG. 5c

FIG. 6

## INTERNATIONAL SEARCH REPORT

International application No.

**PCT/CN2022/080239**

| A. | CLASSIFICATION OF SUBJECT MATTER |
|----|----------------------------------|

H02P 29/68(2016.01)i; H02P 27/08(2006.01)i

According to International Patent Classification (IPC) or to both national classification and IPC

| B. | FIELDS SEARCHED |
|----|-----------------|

Minimum documentation searched (classification system followed by classification symbols)

H02P; G01K

Documentation searched other than minimum documentation to the extent that such documents are included in the fields searched

Electronic data base consulted during the international search (name of data base and, where practicable, search terms used)

CNTXT; ENTXT; DWPI; ENTXTC, CNKI, IEEE: 开关管, 功率管, IGBT, MOS, 晶体管, 晶闸管, 三极管, 温度, 结温, 导通电阻, 内阻, 电流, 电压, 压降, 采样, 测量, 采集, 窗口, 区间, 时刻, Switch, Transistor, junction temperature, conduction resistance, internal resistance, current, voltage, measure, sample, window, interval

| C. | DOCUMENTS CONSIDERED TO BE RELEVANT |
|----|-------------------------------------|

| Category* | Citation of document, with indication, where appropriate, of the relevant passages | Relevant to claim No. |
|-----------|-----------------------------------------------------------------------------------|----------------------|
| X | CN 109443573 A (SUZHOU BLUESTONE NEW POWER CO., LTD.) 08 March 2019 (2019-03-08)<br>description, paragraphs 29-66, and figures 1-2 and 7 | 1, 8-14 |
| Y | CN 109443573 A (SUZHOU BLUESTONE NEW POWER CO., LTD.) 08 March 2019 (2019-03-08)<br>description, paragraphs 29-66, and figures 1-2 and 7 | 2-7 |
| X | US 2020112245 A1 (MITSUBISHI ELECTRIC CORP.) 09 April 2020 (2020-04-09)<br>description, paragraphs 47-54, and figures 5-6 | 1, 8-13 |
| X | JP 2020191707 A (YAZAKI CORP.) 26 November 2020 (2020-11-26)<br>description, paragraphs 16-35, and figures 1-2 | 1, 8-13 |
| X | CN 109994993 A (RENESAS ELECTRONICS CORP.) 09 July 2019 (2019-07-09)<br>description, paragraphs 139-141, and figure 13 and figures 14A-14B | 1, 8-13 |
| X | CN 108270381 A (LIN FENG) 10 July 2018 (2018-07-10)<br>description, paragraph 21 | 1 |

☑ Further documents are listed in the continuation of Box C.  ☑ See patent family annex.

| * | Special categories of cited documents: |
|---|----------------------------------------|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|-----|------|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|----------------------------------------------------------|----------------------------------------------------|
| **03 August 2022** | **23 August 2022** |

| Name and mailing address of the ISA/CN | Authorized officer |
|----------------------------------------|--------------------|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT

| | International application No. |
|---|---|
| | **PCT/CN2022/080239** |

**C.     DOCUMENTS CONSIDERED TO BE RELEVANT**

| Category* | Citation of document, with indication, where appropriate, of the relevant passages | Relevant to claim No. |
|---|---|---|
| Y | CN 107462763 A (HUIZHOU TOPBAND ELECTRICAL TECHNOLOGY CO., LTD.) 12 December 2017 (2017-12-12)<br>description, paragraphs 28-47, and figures 2-4 | 2-7 |
| Y | CN 105450095 A (SICHUAN CHANGHONG ELECTRIC CO., LTD.) 30 March 2016 (2016-03-30)<br>figures 1 and 6 | 2-7 |
| Y | CN 104579082 A (ZHUHAI GREE ELECTRIC APPLIANCES INC.) 29 April 2015 (2015-04-29)<br>description, paragraphs 45-60, and figures 3-4 | 2-7 |
| A | CN 106788050 A (GUANGDONG GOBAO ELECTRONIC TECHNOLOGY CO., LTD.) 31 May 2017 (2017-05-31)<br>entire document | 1-14 |

Form PCT/ISA/210 (second sheet) (January 2015)

Form PCT/ISA/210 (patent family annex) (January 2015)

| INTERNATIONAL SEARCH REPORT | | | | International application No. | | | |
|---|---|---|---|---|---|---|---|
| **Information on patent family members** | | | | **PCT/CN2022/080239** | | | |
| Patent document cited in search report | | | Publication date (day/month/year) | Patent family member(s) | | | Publication date (day/month/year) |
| CN | 109443573 | A | 08 March 2019 | WO | 2020125731 | A1 | 25 June 2020 |
| | | | | CN | 209131853 | U | 19 July 2019 |
| US | 2020112245 | A1 | 09 April 2020 | JP | WO2017168951 | A1 | 22 November 2018 |
| | | | | WO | 2017168951 | A1 | 05 October 2017 |
| | | | | JP | 6522232 | B2 | 29 May 2019 |
| | | | | US | 10658921 | B2 | 19 May 2020 |
| JP | 2020191707 | A | 26 November 2020 | | None | | |
| CN | 109994993 | A | 09 July 2019 | KR | 20190080764 | A | 08 July 2019 |
| | | | | US | 2019204889 | A1 | 04 July 2019 |
| | | | | EP | 3537603 | A1 | 11 September 2019 |
| | | | | JP | 2019122107 | A | 22 July 2019 |
| | | | | US | 11029740 | B2 | 08 June 2021 |
| | | | | JP | 6885862 | B2 | 16 June 2021 |
| CN | 108270381 | A | 10 July 2018 | CN | 208063072 | U | 06 November 2018 |
| CN | 107462763 | A | 12 December 2017 | CN | 107462763 | B | 24 December 2019 |
| CN | 105450095 | A | 30 March 2016 | | None | | |
| CN | 104579082 | A | 29 April 2015 | CN | 104579082 | B | 12 April 2017 |
| CN | 106788050 | A | 31 May 2017 | | None | | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111651477